# FASCICULE DE BREVET EUROPEEN

(11) **EP 3 646 070 B1**
(45) Date de publication et mention de la délivrance du brevet: **22.01.2025**
(21) Numéro de dépôt: 18736847.7
(22) Date de dépôt: 27.06.2018
(51) Int. Cl.: G02B 5/20, G02B 27/01, G03B 21/16, G03B 21/28

(54) **DISPOSITIF D'AFFICHAGE TÊTE-HAUTE**
HEAD-UP-ANZEIGEVORRICHTUNG
HEAD-UP DISPLAY DEVICE

(30) Priorité: 27.06.2017 FR 1755915
(43) Date de publication de la demande: 06.05.2020
(73) Titulaire: Valeo Comfort and Driving Assistance, 94000 Créteil (FR)
(72) Inventeur: GIROD, Vincent, 94046 Créteil Cedex (FR); BAILLY, Stéphane, 49000 Angers (FR); MERMILLOD, Pierre, 94046 Créteil Cedex (FR)
(74) Mandataire: Delplanque, Arnaud
(86) Numéro de dépôt international: PCT/EP2018/067326
(87) Numéro de publication internationale: WO 2019/002411

(56) Documents cités:
- EP-A1- 3 385 775
- WO-A1-2017/094333
- DE-A1- 102014 005 977
- US-A1- 2015 168 795
- US-A1- 2016 048 026
- US-A1- 2016 334 622

## Description

La présente invention concerne les systèmes d'affichage tête-haute, notamment pour véhicule.

Elle concerne plus particulièrement un dispositif d'affichage tête-haute.

### ARRIERE-PLAN TECHNOLOGIQUE

Un dispositif d'affichage tête-haute pour véhicule comprend généralement une unité de génération d'image émettant un faisceau lumineux et au moins un élément optique destiné à projeter ce faisceau lumineux en direction d'une lame partiellement transparente, au niveau de laquelle le faisceau lumineux est réfléchi en direction des yeux du conducteur.

Le conducteur visualise ainsi une image (définie par le faisceau lumineux) au niveau de la lame partiellement transparente, à travers laquelle il voit également la route empruntée par le véhicule.

Par construction d'un tel dispositif d'affichage tête-haute, un rayonnement extérieur (tel que le rayonnement solaire sous certaines incidences) peut arriver sur l'élément optique et, selon un trajet inverse à celui utilisé par le faisceau lumineux précité, être transmis vers l'unité de génération d'image, au risque d'échauffer celle-ci. WO2017/094333A1 est cité comme exemple de dispositif d'affichage tête-haute de l'art antérieur.

### OBJET DE L'INVENTION

Dans ce contexte, la présente invention propose un dispositif d'affichage tête-haute comprenant une unité de génération d'image conçue pour émettre un faisceau lumineux ; une surface réfléchissante configurée pour réfléchir le faisceau lumineux émis par l'unité de génération d'image ; et un miroir configuré pour recevoir le faisceau lumineux réfléchi par la surface réfléchissante, ce dispositif étant caractérisé par une pièce transparente pour la lumière visible, absorbante pour l'infrarouge et interposée sur le trajet du faisceau lumineux entre la surface réfléchissante et le miroir.

Une telle pièce permet d'atténuer la partie infrarouge d'éventuels rayonnements extérieurs entrant dans le dispositif d'affichage tête-haute et de limiter ainsi l'échauffement au niveau de l'unité de génération d'image.

Le positionnement de cette pièce entre la surface réfléchissante et le miroir (par exemple à proximité ou au contact de la surface réfléchissant) permet à cet égard d'intercepter le rayonnement entrant de manière particulièrement efficace, même avec une pièce de dimensions réduites perpendiculairement au trajet du faisceau lumineux. Les deux faces principales de la pièce forment entre elles un angle non nul.

Selon d'autres caractéristiques envisageables à titre optionnel (et donc non limitatif) :
- la surface réfléchissante est formée sur une face de ladite pièce (par exemple par métallisation de cette face) ;
- la surface réfléchissante est située à distance de ladite pièce (dans l'espace défini entre la surface réfléchissante et le miroir) ;
- une face de ladite pièce porte une couche antireflet (dans le but notamment d'éviter la formation d'une image fantôme) ;
- la pièce est réalisée en matière plastique ;
- le miroir est un miroir de grandissement ;
- le miroir est configuré pour réfléchir le faisceau lumineux en direction d'une lame partiellement transparente ;
- un boîtier renferme l'unité de génération d'image et la surface réfléchissante ;
- le boîtier présente une fenêtre traversée par le faisceau lumineux en aval de la surface réfléchissante sur le trajet du faisceau lumineux.

L'invention propose également un dispositif d'affichage tête-haute comprenant une unité de génération d'image conçue pour émettre un faisceau lumineux ; une surface réfléchissante configurée pour réfléchir le faisceau lumineux émis par l'unité de génération d'image ; et un boîtier renfermant l'unité de génération d'image et la surface réfléchissante, le boîtier présentant une fenêtre traversée par le faisceau lumineux en aval de la surface réfléchissante sur le trajet du faisceau lumineux, ce dispositif étant caractérisé par une pièce transparente pour la lumière visible, absorbante pour l'infrarouge, distincte de la fenêtre et disposée sur le trajet du faisceau lumineux entre la surface réfléchissante et la fenêtre.

Les caractéristiques optionnelles présentées ci-dessus peuvent également s'appliquer à un tel dispositif.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un premier exemple de dispositif d'affichage tête-haute qui n'est pas conforme à l'invention ; et
- la figure 2 représente un second exemple de dispositif d'affichage tête-haute selon l'invention.

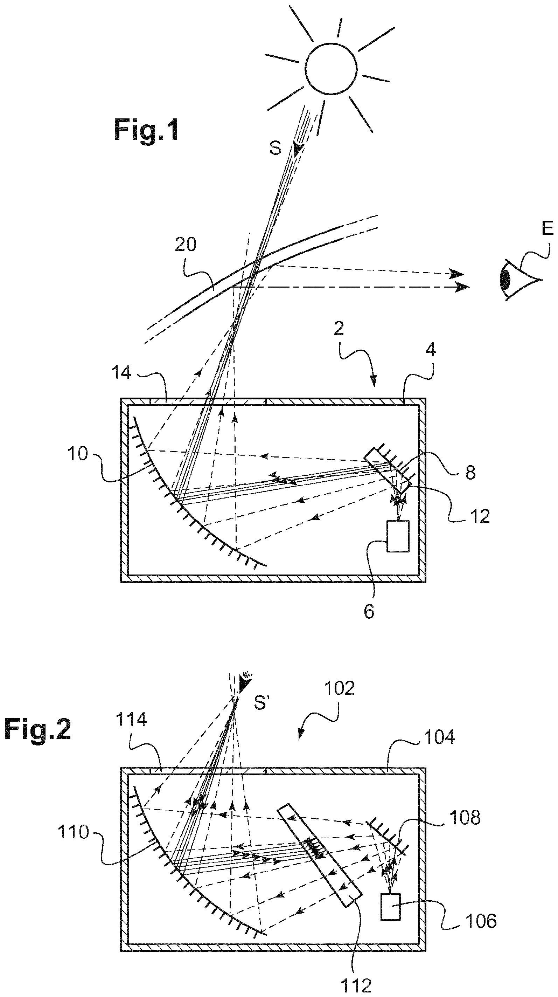

On a représenté sur la figure 1 un dispositif d'affichage tête-haute 2 pour véhicule (ici pour véhicule automobile).

Le dispositif d'affichage tête-haute 2 comprend un boîtier 4 et, à l'intérieur de ce boîtier 4, une unité de génération d'image 6, une surface réfléchissante de renvoi 8 et un miroir de grandissement 10.

Le boîtier 4 permet de protéger les éléments qu'il renferme (notamment l'unité de génération d'image 6, la surface réfléchissante de renvoi 10 et le miroir de grandissement 10) de diverses agressions extérieures (poussière, chute d'objet depuis l'habitacle du véhicule, *etc*.).

L'unité de génération d'image 6 est conçue pour générer (par exemple au moyen d'un écran à cristaux liquides rétroéclairé par une source de lumière) un faisceau lumineux, dirigé ici vers la surface réfléchissante de renvoi 8.

Comme bien visible en figure 1, le faisceau lumineux émis par l'unité de génération d'image 6 est réfléchi par la surface réfléchissante de renvoi 8 en direction du miroir de grandissement 10, où le faisceau lumineux est réfléchi en direction d'une lame partiellement transparente 20 à travers une fenêtre transparente 14 prévue dans le boîtier 4.

La lame partiellement transparente 20 est par exemple le pare-brise du véhicule équipé du dispositif d'affichage tête-haute 2. En variante, la lame partiellement transparente 20 pourrait être un combineur dédié situé entre le pare-brise du véhicule et le conducteur.

Le faisceau lumineux produit par le dispositif d'affichage tête-haute 2 en direction de la lame partiellement transparente 20 est (en partie au moins) réfléchi sur cette lame partiellement transparente 20 en direction des yeux E du conducteur, ce qui permet à celui-ci de visualiser une image (définie par le faisceau lumineux issu de l'unité de génération d'image 6) tout en regardant la route à travers la lame partiellement transparente.

Comme schématiquement représenté en figure 1, il peut arriver sous certaines incidences du rayonnement solaire S que celui-ci traverse la fenêtre 14 vers l'intérieur du boîtier 4 et atteigne le miroir de grandissement 10.

Sous certaines incidences particulières, le rayonnement solaire S peut alors être réfléchi en direction de la surface réfléchissante de renvoi 8 et atteindre l'unité de génération d'image 6.

Afin d'éviter l'échauffement créé par ce phénomène au niveau de l'unité de génération d'image 6, une pièce 12, transparente pour la lumière visible mais absorbante dans l'infrarouge, est placée sur le trajet du faisceau lumineux à l'aval de la surface réfléchissante de renvoi 8, en étant par exemple interposée entre la surface réfléchissante de renvoi 8 et le miroir de grandissement 10.

La pièce 12 est par exemple réalisée en matière plastique, ici en polycarbonate (PC).

La pièce 12 (ayant typiquement la forme générale d'une plaque) a une épaisseur permettant d'obtenir une atténuation substantielle dans l'infrarouge. Le facteur de transmission de la pièce 12 dans l'infrarouge (entre ses deux faces principales) peut ainsi être inférieur à 20 %. Pour ce faire, la pièce 12 est par exemple réalisée dans un matériau (ici une matière plastique) ayant un coefficient d'atténuation (dans l'infrarouge) supérieur à 0,5 mm⁻¹ et/ou une épaisseur comprise entre 3 mm et 5 mm.

Comme déjà indiqué, la pièce 12 est en revanche transparente dans le visible et le facteur de transmission de la pièce 12 dans le visible est ainsi par exemple supérieur à 80 %.

On remarque que, du fait de la configuration du dispositif d'affichage tête-haute 2 avec un chemin optique défini et relativement étroit entre l'unité de génération d'image 6 et la fenêtre 14, les rayonnements lumineux potentiellement incidents de l'extérieur (tels que le rayonnement solaire) et susceptibles de produire un échauffement suivent la plupart du temps ce chemin optique en sens inverse.

Ainsi, la disposition de la pièce 12 en forme de plaque sur le trajet du faisceau lumineux permet généralement d'atténuer (principalement par absorption) la partie infrarouge des rayons lumineux entrants dans le dispositif d'affichage tête-haute 2.

On remarque par ailleurs que le positionnement de la pièce 12 à l'aval de la surface réfléchissante 8 permet d'éviter l'entrée du rayonnement infrarouge aux abords de l'unité de génération d'image 6, sans avoir à utiliser une surface réfléchissante complexe (qui réfléchirait par exemple la lumière dans le visible et non dans l'infrarouge).

Dans l'exemple de la figure 1, la surface réfléchissante 8 est réalisée sur la face de la pièce 12 opposée à l'unité de génération d'image 6 (et donc ici au miroir de grandissement 10), par exemple par métallisation de cette face.

Dans ce cas, le faisceau lumineux produit par l'unité de génération d'image 6 traverse une première fois la pièce 12, est réfléchi sur la surface réfléchissante 8, puis traverse une seconde fois la pièce 12 en direction ici du miroir de grandissement 10, où le faisceau lumineux est réfléchi en direction de la lame partiellement transparente 20 à travers la fenêtre 14.

Le positionnement de la pièce 12 à proximité de la surface réfléchissante de renvoi 8 (ici au contact de cette surface réfléchissante de renvoi 8) permet d'utiliser une pièce 12 dont les dimensions (selon un plan perpendiculaire au faisceau lumineux) sont relativement réduites, ce qui limite la consommation de matière pour réaliser la pièce 12.

Afin d'éviter la formation d'une image fantôme (qui serait produite, sans traitement particulier, par la réflexion d'une partie du faisceau lumineux émis par l'unité de génération d'image 6 sur la face de la pièce 12 non dédiée à une telle réflexion), on peut prévoir de déposer une couche antireflet sur une face principale de la pièce 12, ici sur la face principale qui ne forme pas la surface réfléchissante 8, à savoir la face principale de la pièce 12 dirigée vers l'unité de génération d'image 6.

Selon une possibilité envisageable, cette couche antireflet peut améliorer la transmission dans le visible (effet antireflet) mais posséder un coefficient de réflexion notable (par exemple supérieur à 50%) dans l'infrarouge. On peut utiliser pour ce faire un traitement de type dichroïque.

Comme représenté en figure 1, un rayonnement extérieur (réfléchi ici sur le miroir de grandissement 10) est quant à lui substantiellement atténué, pour sa partie située dans l'infrarouge, par la pièce 12 et le rayonnement infrarouge reçu de l'extérieur n'atteint donc pas (ou en proportion minime) la surface réfléchissante de renvoi 8, ce qui diminue l'échauffement que pourrait causer ce rayonnement au niveau de l'unité de génération d'image 6.

La figure 2 représente un second exemple de dispositif d'affichage tête-haute 102 conforme à l'invention.

Comme le dispositif d'affichage tête-haute de la figure 1, le dispositif d'affichage tête-haute 102 de la figure 2 comprend un boîtier 104 et, à l'intérieur de ce boîtier 104, une unité de génération d'image 106, une surface réfléchissante de renvoi 108 et un miroir de grandissement 110.

L'unité de génération d'image 106 est conçue pour générer (par exemple au moyen d'un écran à cristaux liquides rétroéclairé par une source de lumière) un faisceau lumineux, dirigé ici vers la surface réfléchissante de renvoi 108.

Le faisceau lumineux émis par l'unité de génération d'image 106 est réfléchi par la surface réfléchissante de renvoi 108 en direction du miroir de grandissement 110, où le faisceau lumineux est réfléchi en direction d'une lame partiellement transparente (non représentée) à travers une fenêtre transparente 114 prévue dans le boîtier 104.

La lame partiellement transparente est par exemple le pare-brise du véhicule équipé du dispositif d'affichage tête-haute 102. En variante, la lame partiellement transparente pourrait être un combineur dédié situé entre le pare-brise du véhicule et le conducteur.

Comme dans le cas de la figure 1, le faisceau lumineux produit par le dispositif d'affichage tête-haute 102 en direction de la lame partiellement transparente est (en partie au moins) réfléchi sur cette lame partiellement transparente en direction des yeux du conducteur, ce qui permet à celui-ci de visualiser une image (définie par le faisceau lumineux issu de l'unité de génération d'image 106) tout en regardant la route à travers la lame partiellement transparente.

Afin de limiter le réchauffement potentiellement produit par un rayonnement extérieur entrant dans le dispositif d'affichage tête-haute 102 par la fenêtre 114 (rayonnement dont la partie infrarouge est représenté par une flèche S' en figure 2), une pièce 112 transparente pour la lumière visible et absorbante dans l'infrarouge est interposée (sur le trajet du faisceau lumineux) entre la surface réfléchissante de renvoi 108 et le miroir de grandissement 110.

Comme visible en figure 2, la pièce 112 est ici située dans l'espace défini (à l'intérieur du dispositif d'affichage tête-haute 102) entre la surface réfléchissante de renvoi 108 et le miroir de grandissement 110 (c'est-à-dire à distance de la surface réfléchissante de renvoi 108 et du miroir de grandissement 110).

Cette pièce 112 est par exemple réalisée en matière plastique.

La pièce 112 peut être réalisée dans un matériau du même type que la pièce 12 décrite ci-dessus et/ou présenter des caractéristiques (dans le visible et dans l'infrarouge) identiques (pour certaines au moins) à celles de la pièce 12 décrite ci-dessus. On pourra ainsi se référer à la description de la pièce 12 donnée ci-dessus pour plus de précisions sur la constitution de la pièce 112.

Dans le mode de réalisation de la figure 2, afin d'éviter la formation d'une image fantôme, les deux faces principales de la pièce 112 sont légèrement inclinées l'une par rapport à l'autre, c'est-à-dire forment entre elles un angle nonnul (compris par exemple entre 5 degrés et 15 degrés).

En variante, on pourrait utiliser une pièce à faces principales parallèles et prévoir alors une couche antireflet sur l'une des faces principales de la pièce.

La réalisation de la pièce 112 en tant qu'élément séparé (notamment distinct de la fenêtre 114 et de la surface réfléchissante de renvoi 108) permet de choisir pour cette pièce 112 un matériau particulièrement adapté à la fonction réalisée (notamment en ce qui concerne sa transparence pour la lumière visible et son atténuation pour l'infrarouge).

## Revendications

1. Dispositif d'affichage tête-haute (2 ; 102) comprenant :
- une unité de génération d'image (6 ; 106) conçue pour émettre un faisceau lumineux ;
- une surface réfléchissante (8 ; 108) configurée pour réfléchir le faisceau lumineux émis par l'unité de génération d'image (6 ; 106) ; et
- un miroir (10 ; 110) configuré pour recevoir le faisceau lumineux réfléchi par la surface réfléchissante (8 ; 108),
**caractérisé par** une pièce (12 ; 112) transparente pour la lumière visible, absorbante pour l'infrarouge et interposée sur le trajet du faisceau lumineux entre la surface réfléchissante (8 ; 108) et le miroir (10 ; 110), et dans lequel les deux faces principales de la pièce (112) forment entre elles un angle non nul.

2. Dispositif d'affichage tête-haute selon la revendication 1, dans lequel la surface réfléchissante (8) est formée sur une face de ladite pièce (12).

3. Dispositif d'affichage tête-haute selon la revendication 1, dans lequel la surface réfléchissante (108) est située à distance de ladite pièce (112).

4. Dispositif d'affichage tête-haute selon l'une des revendications 1 à 3, dans lequel une face de ladite pièce (12) porte une couche antireflet.

5. Dispositif d'affichage tête-haute selon l'une des revendications 1 à 4, dans lequel la pièce (12 ; 112) est réalisée en matière plastique.

6. Dispositif d'affichage tête-haute selon l'une des revendications 1 à 5, dans lequel le miroir (10 ; 110) est un miroir de grandissement.

7. Dispositif d'affichage tête-haute selon l'une des revendications 1 à 6, dans lequel le miroir (10 ; 110) est configuré pour réfléchir le faisceau lumineux en direction d'une lame partiellement transparente (20).

8. Dispositif d'affichage tête-haute selon l'une des revendications 1 à 7, dans lequel un boîtier (4 ; 104) renferme l'unité de génération d'image (6 ; 106) et la surface réfléchissante (8 ; 108).

9. Dispositif d'affichage tête-haute selon la revendication 8, dans lequel le boîtier (4 ; 104) présente une fenêtre (14 ; 114) traversée par le faisceau lumineux en aval de la surface réfléchissante (8 ; 108) sur le trajet du faisceau lumineux.

## Patentansprüche

1. Head-up-Display-Vorrichtung (2; 102), umfassend:
- eine Bilderzeugungseinheit (6; 106), die dazu ausgelegt ist, einen Lichtstrahl zu emittieren;
- eine reflektierende Fläche (8; 108), die dazu ausgestaltet ist, den von der Bilderzeugungseinheit (6; 106) emittierten Lichtstrahl zu reflektieren; und
- einen Spiegel (10; 110), der dazu ausgestaltet ist, den von der reflektierenden Fläche (8; 108) reflektierten Lichtstrahl zu empfangen,
**gekennzeichnet durch** ein Teil (12; 112), das für das sichtbare Licht transparent ist, für Infrarot absorbierend ist und auf dem Weg des Lichtstrahls zwischen der reflektierenden Fläche (8; 108) und dem Spiegel (10; 110) angeordnet ist, und wobei die beiden Hauptflächen des Teils (112) untereinander einen Winkel ungleich null bilden.

2. Head-up-Display-Vorrichtung nach Anspruch 1, wobei die reflektierende Fläche (8) auf einer Seite des Teils (12) gebildet ist.

3. Head-up-Display-Vorrichtung nach Anspruch 1, wobei die reflektierende Fläche (108) von dem Teil (112) beabstandet gelegen ist.

4. Head-up-Display-Vorrichtung nach einem der Ansprüche 1 bis 3, wobei eine Seite des Teils (12) eine Antireflexschicht trägt.

5. Head-up-Display-Vorrichtung nach einem der Ansprüche 1 bis 4, wobei das Teil (12; 112) aus einem Kunststoff hergestellt ist.

6. Head-up-Display-Vorrichtung nach einem der Ansprüche 1 bis 5, wobei der Spiegel (10; 110) ein Vergrößerungsspiegel ist.

7. Head-up-Display-Vorrichtung nach einem der Ansprüche 1 bis 6, wobei der Spiegel (10; 110) dazu ausgestaltet ist, den Lichtstrahl in Richtung einer teilweise transparenten Scheibe (20) zu reflektieren.

8. Head-up-Display-Vorrichtung nach einem der Ansprüche 1 bis 7, wobei ein Gehäuse (4; 104) die Bilderzeugungseinheit (6; 106) und die reflektierende Fläche (8; 108) umschließt.

9. Head-up-Display-Vorrichtung nach Anspruch 8, wobei das Gehäuse (4; 104) ein Fenster (14; 114) aufweist, das von dem Lichtstrahl stromab der reflektierenden Fläche (8; 108) auf dem Weg des Lichtstrahls durchquert wird.

## Claims

1. Head-up display device (2; 102) comprising:
- an image generation unit (6; 106) designed to emit a light beam;
- a reflective surface (8; 108) configured to reflect the light beam emitted by the image generation unit (6; 106); and
- a mirror (10; 110) configured to receive the light beam reflected by the reflective surface (8; 108), **characterized by** a part (12; 112) which is transparent to visible light, absorbent to infrared and interposed in the path of the light beam between the reflective surface (8; 108) and the mirror (10; 110), and wherein the two main faces of the part (112) form a non-zero angle between them.

2. Head-up display device according to Claim 1, wherein the reflective surface (8) is formed on one face of said part (12).

3. Head-up display device according to Claim 1, wherein the reflective surface (108) is situated at a distance from said part (112).

4. Head-up display device according to one of Claims 1 to 3, wherein one face of said part (12) bears an antireflection layer.

5. Head-up display device according to one of Claims 1 to 4, wherein the part (12; 112) is made of plastic.

6. Head-up display device according to one of Claims 1 to 5, wherein the mirror (10; 110) is a magnifying mirror.

7. Head-up display device according to one of Claims 1 to 6, wherein the mirror (10; 110) is configured to reflect the light beam towards a partially transparent plate (20).

8. Head-up display device according to one of Claims 1 to 7, wherein a housing (4; 104) encloses the image generation unit (6; 106) and the reflective surface (8; 108) .

9. Head-up display device according to Claim 8, wherein the housing (4; 104) has a window (14; 114) through which the light beam passes downstream of the reflective surface (8; 108) in the path of the light beam.
